(19) Europäisches Patentamt

European Patent Office

Office européen des brevets

(11) **EP 1 688 683 A1**

(12) **EUROPEAN PATENT APPLICATION**

(43) Date of publication:
09.08.2006 Bulletin 2006/32

(21) Application number: 05100054.5

(22) Date of filing: 06.01.2005

(51) Int Cl.:
*F24J 2/04* (2006.01)          *F24J 2/48* (2006.01)
*F24J 2/26* (2006.01)          *C25D 11/22* (2006.01)
*C25D 11/18* (2006.01)          *C25D 11/04* (2006.01)
*C23F 17/00* (2006.01)          *C23G 1/00* (2006.01)
*C23C 14/22* (2006.01)

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Fenis Teknik Ürünler A.S.**
**41400 Istanbul (TR)**

(72) Inventors:
• **KULIYEV, Sadig Ahmetoglu**
  **Fenis Teknik Ürünler A.S.**
  **Gebze**
  **41400, Kocaeli (TR)**

• **TOROGLU, Celal**
  **Fenis Teknik Ürünler A.S.**
  **Gebze**
  **41400, Kocaeli (TR)**
• **ULUDEVECI, Mehmet**
  **Fenis Teknik Ürünler A.S.**
  **Gebze**
  **41400, Kocaeli (TR)**

(74) Representative: **Sevinç, Erkan et al**
**Istanbul Patent & Trademark Consultancy Ltd.**
**Plaza-33, Buyukdere cad. No: 33/16**
**Sisli**
**34381 Istanbul (TR)**

(54) **Light weight high effeciency collector made of aluminum foil having selective surface**

(57)     A method for producing an absorbent body of a solar collector and a solar collector having said absorbent body is disclosed. The absorbent body is composed of aluminum foil ands is mechanically deformed prior to electrochemically treated for increasing heat transfer surface area. Black bodies are formed on the porous surface in which absorbance of the solar rays approach maximum efficiency. The aluminum foil has a thickness in the range of 0,10-0,80 mm. and preferably in the range of 0,35-0,40 mm. The foil is mechanically deformed so as to produce a rough surface with irregular peaks and craters. A chemically increased surface is obtained by treating said aluminum foil with a strong base or an alkaline carbonate.

Figure 9

## Description

## Technical Field of the Invention

The present invention relates to an improved absorbent body of a light weight solar collector and a method for producing the same. The absorbent body of the solar collector proposed by the present invention features a porous and roughened aluminum folio surface in order to provide an extended selective surface area while providing the advantage of a lightweight and relatively cheap construction.

## Background of the Invention

The absorbent body of the solar collector proposed by the present invention comprises an aluminum foil (10) absorption surface with an increased selective surface area on which the metal pipeline carrying the circulation fluid is fixedly attached. The surface area is extended through both a mechanical, chemical and an electrochemical process conducted on the metal foil (10) so that the surface area is increased in the micro and macro levels. Characterization portions regarding to beneficial properties of the collector and its production methods are further detailed in the description.

A large number of solar collectors with various properties are disclosed in the prior art. For example, US 6,082,353 (van Doorn) discloses a solar collector and its production method. The conventional collector of this document principally utilizes an extruded aluminum panel and a number of parallel copper tubes inserted into the inner bores of the said panel. Key features of this invention are hidden in the tight fixation of the tubes through the bores of the aluminum panel.

Another patented solar collector and its production process is described in US 6,003,509 (Chiavarotti et al.) where an electrochemical surface etching treatment is disclosed. Blackening and acid treatment of the surface during the process provides the major beneficial properties in the sense of thermal energy absorbance of the collector surface.

WO 97/00335 also discloses a coating process for providing a solar selective surface through an electrochemical operation in which a three-layer structure is formed in the presence of a reactive gas. The inner layer in the form of a bright metal infrared reflective coating layer, a solar energy absorptive layer and an anti-reflective surface layer are the key features of the said process.

US 4,442,829 (Yanagida et al.) is another document disclosing the production of a material having selective solar absorption properties by way of using an electrochemical operation where an anodic oxide film is formed on the aluminum material surface and metal particles are electrochemically filled in the micro pores of the anodic oxide film in order to selectively absorb solar energy.

The above cited patents and many other documents in the prior art that relate to the field of solar heat collectors are generally concerned with improving the solar absorbance and heat conductance performances by means of special treatments like electrochemical operations and accordingly various fixation configurations of metal sheets with conduits thereafter. The present invention is providing a highly selective and efficient surface in aluminum foil material in which the conduits, preferably copper pipes, are located in an economical and effective manner.

A major problem associated with all aforementioned prior art documents is the fact that solar collectors proposed by these are heavy products. They all adopt a relatively thick absorption body having a planar surface. This fact not only affects the weight of the collector but also its material costs and production ease as well. Needless to say, all three issues are dominant factors in the unit price of the collector.

## Objects of the Invention

An object of the present invention is to provide light-weight high-efficiency absorbent body for a solar collector which has a thin selective aluminum foil surface whose absorption area is increased by both mechanical and chemical treatments.

A further object of the present invention is to provide a low cost process for the mass production of light-weight high-efficiency solar collectors which exhibit high absorbance to solar rays.

## Summary of the Invention

The objects of the invention are achieved through use of an extra thin aluminum foil (10) with an increased selective surface area with black body (40,41) like porous structure obtained through a number of chemical and mechanical process steps applied on the same. Selective surface of the aluminum foil (10) is initially extruded for obtaining a rough surface on which an ordinary projection is provided. Surface area is further extended by treating the aluminum foil (10) with a strong base such as NaOH or with caustic soda where a porous structure on the surface is obtained in result of the fact that the strong base reacts rapidly with aluminum and other components of the alloy composition releasing a considerable amount of hydrogen. Cleaning of the surface from various salts and bases is made with an acid bath containing preferably nitric acid. After treating the surface with a phosphoric and sulphuric acid, aluminum foil is taken into an electrochemical oxidation process where the surface is coated with a thin oxide layer in the presence of ortho-phosphoric acid with direct current. Activation of the oxide on the surface is achieved through immersing it into sodium bicarbonate bath. At the last step of the process, external surface with oxide film is pigmented preferably with nickel with alternative current.

Resulting aluminum foil (10) is corrugated into a configuration forming longitudinal channels (11) for locating copper circuits (20). This simple configuration brings an important advantage as the necessity forming channels in an e.g. cast mold aluminum selective absorption body is eliminated. The aluminum foil (10) surrounds the conduit (20) by means of longitudinal channels (11) and therefore better heat conductance through copper pipes (20) and circulating fluid is provided. Said copper circuits (20) are tightly fixed to the aluminum foil (10).

The aluminum foil (10) having improved surface properties becomes convenient for use in the production of solar heat collectors. Especially the initial mechanical treatment and the following chemical treatment with a strong base increase the effective surface area for better solar ray absorbance. The mechanical process as well as the electro-chemical process is designed to allow low cost mass production.

## Brief Description of the Figures

Accompanying figures are given solely for the purpose of schematically exemplifying the principles of the present invention.

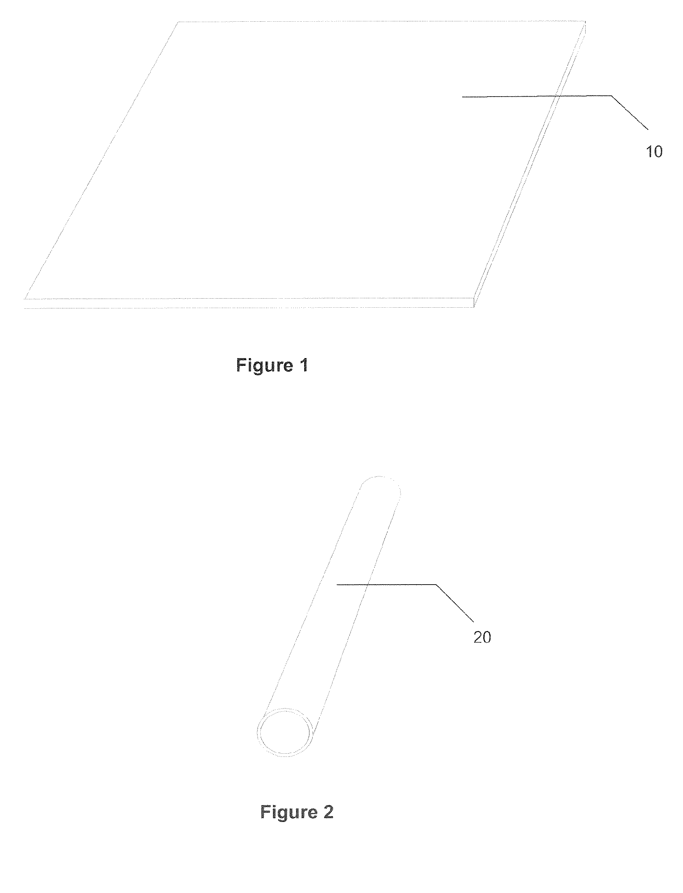

Figure 1 is the primitive form of the aluminum foil (10) preliminary mechanically formed before the chemical treatment steps of the process disclosed with the present invention.

Figure 2 is a schematic demonstration of the pipe (20), which is located and fixedly attached into the channel (11) on the aluminum foil (10).

Figure 3 is a schematic demonstration of the aluminum foil (10) after corrugating the same, showing the longitudinal channel (11) along its upper surface.

Figure 4 is a schematic view of the aluminum foil (10) with the circuit (20) placed through the channels (11) of the same.

Figure 5 is a cross sectional front view of the pipes (20) located in the aluminum foil channels (11).

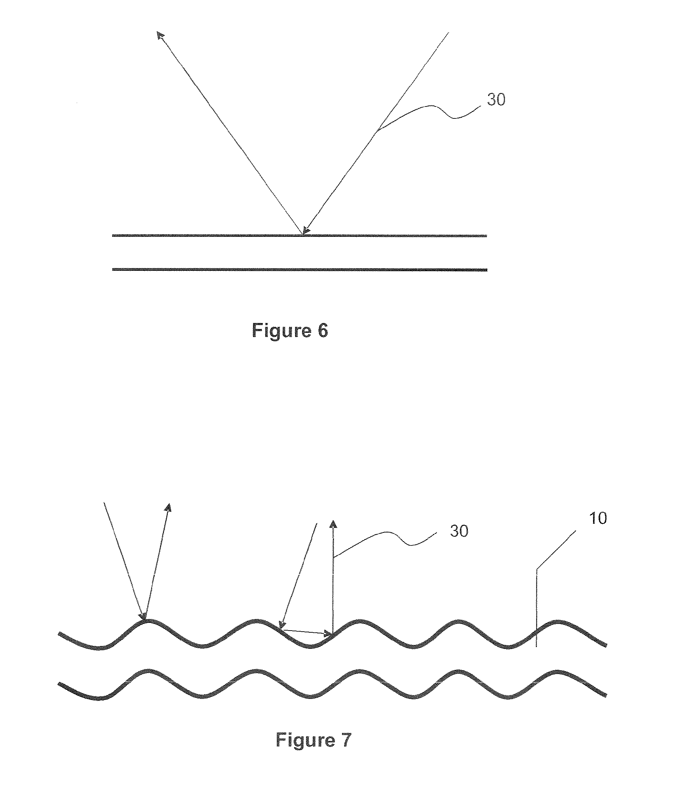

Figure 6 shows the behavior of a solar ray (30) when it comes onto an ordinary surface, which is neither mechanically nor chemically treated.

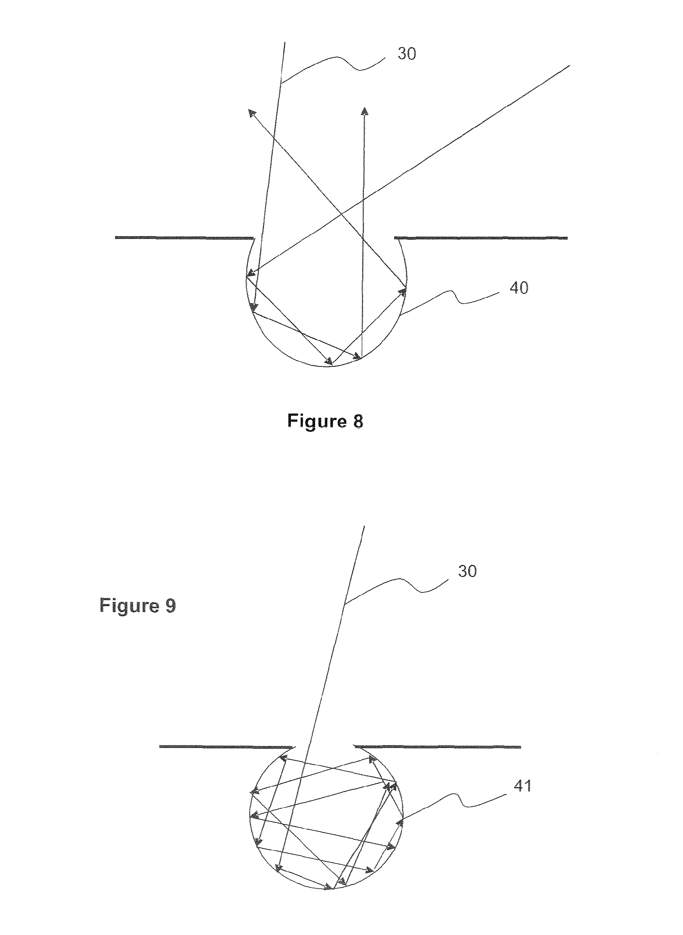

Figure 7 shows the mechanically treated aluminum foil (10) surface having irregular shapes.

Figure 8 shows a pore (40) of the aluminum foil surface formed during chemical treatments of the process.

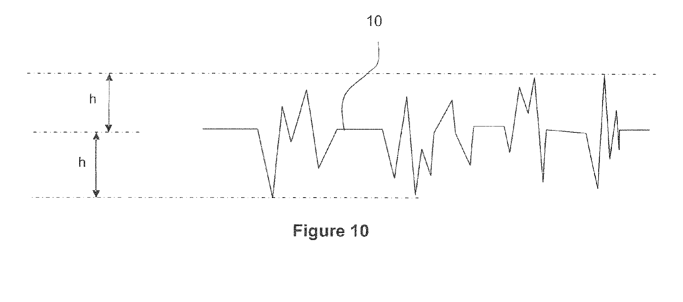

Figure 9 demonstrates a black body (41) of the aluminum foil surface formed during electrochemical treatments of the process.

Figure 10 is a cross sectional schematic view of the mechanically deformed aluminum foil (10).

## Detailed Description of the Invention

Solar collectors and production methods defined in the prior art are generally focused on increasing the radiation absorbance and heat conductance performances of the heat collector systems. The modifications on aluminum foil surfaces are frequently directed to increase the effective surface area in order to provide a higher amount of radiant energy accumulation on the external surface exposed to solar rays (30).

The aluminum foil (10) used in the solar collector of the present invention is preferably selected from 3XXX series alloys that comprise Mn and Fe in their chemical compositions. These series of aluminum alloys are widely used in the industry for various metal sheet works. Heat conductance and surface treatment properties of the 3XXX series aluminum alloys are noted to be one of the most convenient alloys for producing the conventional solar heat collector systems. Especially the chemical process steps of the present invention present much more benefits with 3XXX series of aluminum alloys.

The Al foil (10) defined above is preferred to be an extra-thin sheet, which has a thickness range of 0,10-0,80 mm. and preferably in the 0,35-0,40 mm range. Said foil (10) is mechanically deformed in order to maintain a rough surface with irregular peaks and craters where the maximum heights of the same are about 50% of the regular foil thickness. These surface irregularities can be formed simply by way of a cold rolling treatment during the mass production of the Al foil. Likewise, the aluminum foil can be passed in between two rollers to gain the mechanical surface irregularities in a preliminary stage of the collector manufacturing process. Thickness of the aluminum foil (10) greatly influences the amount of solar heat transferred to the conduit (20). The well known conductive heat transfer equation presented as Fourier's Law simply shows ;

$$q/A = k. \, dT/dx$$

where q is the amount of heat transferred, A is the cross sectional area normal to the direction of flow of heat, k is the thermal conductivity, T is temperature and x is the distance. It is evident that the lower the x, distance through which heat is conducted, the more the amount of conducted heat. Besides the efficiency factor, economical and environmental benefits of the thin foils are quite important in the industry.

According to the preferable process of the present invention aluminum foils are initially treated in a weak alkali bath for removing oil and dirtiness on their surface. Preferred temperature of the bath is kept in the 55-65 °C range for a duration of 10 to 15 minutes.

Following step shows one of the key features of the present invention where the aluminum foil (10) is treated with a strong base or carbonate form of the same. There are two main reactions occurred in the bath one of which is between the oxide film and base and the other is between the alloy surface and base. During the second reaction a considerable amount of hydrogen is emitted in gaseous form, which mainly enhances the pore (40) and black body (41) formation on the surface.

The corrosive reactions between the base and aluminum foil (10) are another reason of pore (40) and black body (41) formation. The base used in this step has different reaction rates with aluminum, manganese, iron and other components of the alloy, which latterly causes micro pores on the surface. Concentration of the bath basic solution is adjusted to be preferably 60-80 g/l and Al concentration to be 120-130 g/l keeping the same around preferably 65-70 °C for a duration of 1 to 5 minutes.

Aluminum foil (10) is optionally immersed into a nitric acid solution right after the base treatment in order to remove the salt and caustic wastes that are hydrolysis products of the previous step. Surface structure is completely neutralized and cleaned in this step. Nitric acid concentration is adjusted to preferably 80-100 g/l keeping the temperature at 20-25 °C for 10-15 minutes.

Outer surface of the aluminum foil (10) is treated 40-90 °C by means of a bath solution containing 60% phosphoric acid and 40% sulfuric acid for 1-3 minutes.

The surface of the aluminum foil (10) is further exposed to an electrochemical oxidation in order to coat the same for obtaining a selective dark surface. Preferably ortho-phosphoric acid solution at a concentration of preferably 200-300 g/L is employed as the electrolytic medium where 10-15 V, more preferably 12,5-13 V of voltage is applied at 20-22 °C for 15 minutes. Finally an oxidation layer having a thickness of about 1 micron is obtained at the outer surface. Oxidized surface of the foil is activated with neutralizing it in preferably 15-25 g/L of sodium bicarbonate solution at 20-25 °C for 5-10 minutes.

The last step of the present process is pigmentation of the oxidized surface with Nickel under around 17 V and alternative current. Bath is constituted of a mixture of 70-110 g/L $NiSO_4*6H_2O$ and 10-50 g/L $H_3BO_3$ and the process is executed at 18-20 °C for 4-8 minutes. Final product is dried in a furnace at 70 °C.

Final product of the process is a highly selective aluminum foil (10) having high solar absorptivity and efficiency as the surface is extended with the roughness, pore (40) and black body (41) formations where said pores (40) and black bodies (41) present extremely high absorptivity. The solar radiation comes into the holes of the pores (40) and black bodies (41) and impinges on the wall while a part is absorbed there and a part is reflected in all around. The reflected rays (30) impinge again, part is absorbed and the process continues until nearly all energy of the rays (30) is absorbed through the body. The importance of the surface area and emissivity of a surface for the heat transfer occurrence through radiation is also evident according to the conventional equation;

$$q = A.\ \varepsilon.\sigma.T^4$$

Where; q is heat flow, A is surface area, σ is a constant and T is temperature. Therefore, a conclusion can readily be established as the bigger surface area (A) and emissivity (e) values directly enhance the amount of heat transfer through the collector structure.

In a laboratory investigation conducted on a sample produced according to the present invention, the absorbance value of the sample is found to be in between 91-93% at a temperature of 70°C whereas the emittance was between 16-18% at the same temperature.

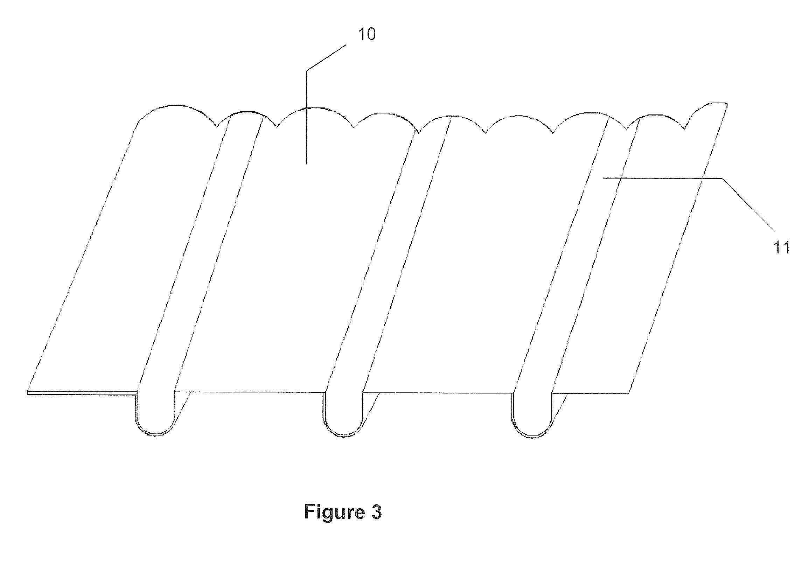

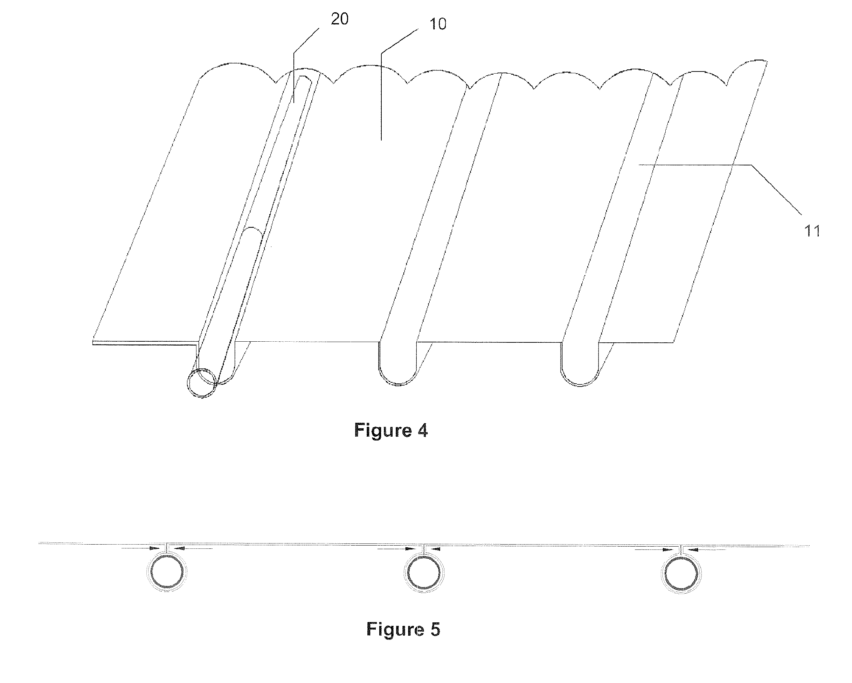

A further stage of the process for producing the efficient solar collector of the present invention requires forming the treated aluminum foil (10) into appropriate form so that obtaining an ideal configuration depending on the primary materials of coated aluminum foil (10) and the copper conduit (20). Aluminum foil (10) is corrugated as in figure 3 by means of pressing and/or extruding on which copper conduits (20) are placed in a manner that the aluminum foil (10) surrounds the external surface of the copper conduits (20) providing maximum contact area between the aluminum foil (10) and said copper conduits (20) as in figure 4. All copper conduits (20) are tightened and fixedly attached to the aluminum foil (10) for better heat conductivity and corrosion resistivity.

As the consequence of the detailed description presented above, the present invention discloses a novel method for preparing a solar collector from raw material through final product in which dew points can be recognized as the method of increasing the surface area such that forming a porous surface having absorptive black body (41) properties beside the optimum configuration of the final collector. All steps and subjects of the present invention should be distinguished from the prior art according to the above-mentioned considerations.

Claims

1. A method for producing an absorbent body of a solar collector **characterized in that** said method comprises the steps of:

   a) mechanically deforming an aluminum foil (10) whose thickness is in the range of 0,10-0,80 mm. and preferably in the range of 0,35-0,40 mm. so as form a rough surface with irregular peaks and craters,
   b) treating said aluminum foil (10) with a strong base or an alkaline carbonate,
   c) corrugating the foil to form longitudinal channels (11) suitable for locating a number of conduits and inserting conduits (20) into said channels (11).

2. A method for producing an absorbent body of a solar collector according to claim 1 wherein said process further comprises the step of:

treating said aluminum foil (10) in a weak alkali bath, prior to the base treatment of step a), for removing oil and dirtiness of the surface at a temperature range of 40-90 °C preferably at 55-65 °C for 10-15 minutes,

3. A method for producing an absorbent body of a solar collector according to claim 2 wherein said process further comprises the step of:

treating the aluminum foil (10) with a nitric acid solution having the concentration range of 50-130 g/L more preferably 80-100 g/L for neutralizing the same from various salts and caustic wastes wherein the bath temperature is kept within the range of 20-25 °C for 10-15 minutes,

4. A method for producing an absorbent body of a solar collector according to claim 1 and 2 wherein said process further comprises the step of:

treating the aluminum foil (10) with a solution comprising 40-80 % (w/w) phosphoric acid and 20-60 % (w/w) sulfuric acid at a temperature range of 40-90 °C for 1 to 3 minutes in order to obtain an active surface for anodic oxidation.

5. A method for producing an absorbent body of a solar collector according to claim 4 wherein said process further comprises the steps of:

● oxidizing the aluminum foil (10) surface with an electrochemical operation using ortho-phosphoric acid as the electrolytic solution to reach a oxide film thickness of at least 1 micron,
● activating the oxide film of the surface with a sodium bicarbonate solution having a concentration of 15-25 g/L at 20-25 °C for 5-10 minutes.
● pigmentating the oxide film of the surface with nickel in a bath solution mixture comprising 70-110 g/L $NiSO_4*6H_2O$ and 10-50 g/l of $H_3BO_3$ at a temperature range of 18-20 °C.

6. A method for producing an absorbent body of a solar collector according to any of the preceding claims wherein said strong base is NaOH.

7. A method for producing an absorbent body of a solar collector according to any of the preceding claims wherein the alkaline carbonate is $Na_2CO_3$.

8. A method for producing an absorbent body of a solar collector according to any of the preceding claims wherein the Al folio is an Al 3XXX series alloy.

9. A method for producing an absorbent body of a solar collector according to any of the preceding claims wherein the peaks and craters have a maximum irregularity height of around 50% of the foil thickness.

10. A method for producing an absorbent body of a solar collector according to claim 1 wherein operation temperature of the base treatment is preferably 40-90 °C more preferably 65-70 °C for a time frame of 1-3 minutes.

11. A method for producing an absorbent body of a solar collector according to claim 5 wherein oxidation of the aluminum alloy surface is applied in an electrolytic solution concentration of 150-350 g/L, more preferably 200-300 g/L under direct current with a voltage 10-15 V.

12. A method for producing an absorbent body of a solar collector according to claim 5 wherein said pigmentation step is achieved through under an alternative current creating a voltage of about 17 V for 3 to 8 minutes.

13. An absorbent body of a solar collector produced according to any of the preceding claims particularly for use in solar heat collectors and heat installations.

14. A solar heat collector produced according to any of the preceding claims.

**Figure 1**

**Figure 2**

10

20

Figure 3

EP 1 688 683 A1

**Figure 4**

**Figure 5**

30

Figure 6

30

10

Figure 7

30

40

**Figure 8**

**Figure 9**

30

41

Figure 10

# EP 1 688 683 A1

**European Patent Office**

## EUROPEAN SEARCH REPORT

**Application Number**

EP 05 10 0054

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 148 294 A (SCHERBER ET AL) 10 April 1979 (1979-04-10) * columns 2-3; figures 1-4 * | 1-14 | F24J2/04 F24J2/48 F24J2/26 C25D11/22 C25D11/18 C25D11/04 C23F17/00 C23G1/00 C23C14/22 |
| Y | EP 0 052 569 A (PATENTS AND RESEARCHES ESTABLISHMENT SOCIETE DE DROIT DU LIECHTENSTEIN) 26 May 1982 (1982-05-26) * page 6; figures 1-5 * | 1,3-14 | |
| Y | GB 2 009 793 A (GRANGES ALUMINIUM AB) 20 June 1979 (1979-06-20) * page 2, column 1; claims 1-10 * | 1,3-14 | |
| A | US 4 440 606 A (POWERS ET AL) 3 April 1984 (1984-04-03) * the whole document * | 1-5 | |
| Y | EP 0 249 919 A (WEIKERT, DIETRICH) 23 December 1987 (1987-12-23) * column 33, paragraph 1; figure 13 * | 1-5 | |
| Y | US 3 920 413 A (LOWERY ET AL) 18 November 1975 (1975-11-18) * column 2, line 66 - column 3, line 68 * * column 5, line 45 - column 7, line 65 * | 1-4 | TECHNICAL FIELDS SEARCHED (Int.Cl.7) F24J C25D C23F C23G C23C |
| Y | GB 1 588 936 A (SHOWA ALUMINIUM KK) 29 April 1981 (1981-04-29) * page 2 * | 5 | |
| A | US 4 394 415 A (TSUDA ET AL) 19 July 1983 (1983-07-19) * column 2, lines 43-68 * | 5 | |

-/--

The present search report has been drawn up for all claims

| Place of search | Date of completion of the search | Examiner |
|---|---|---|
| Munich | 11 August 2005 | Merkt, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

# EP 1 688 683 A1

**European Patent Office**

## EUROPEAN SEARCH REPORT

**Application Number**

EP 05 10 0054

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | EP 1 279 905 A (GREEN ONE TEC SOLAR-INDUSTRIE GMBH) 29 January 2003 (2003-01-29) * paragraphs [0013] - [0016]; claims 1-3; figures 1-3 * | 1-14 | |
| Y | WO 91/03583 A (ALCAN INTERNATIONAL LIMITED) 21 March 1991 (1991-03-21) * pages 11-12 * | 1-14 | |
| A | CH 589 269 A5 (DUERST, FELIX) 30 June 1977 (1977-06-30) * the whole document * | 1 | |
| A | US 5 472 788 A (BENITEZ-GARRIGA ET AL) 5 December 1995 (1995-12-05) * the whole document * | | |
| | | | **TECHNICAL FIELDS SEARCHED (Int.Cl.7)** |

The present search report has been drawn up for all claims

| Place of search | Date of completion of the search | Examiner |
|---|---|---|
| Munich | 11 August 2005 | Merkt, A |

EP 1 688 683 A1

**ANNEX TO THE EUROPEAN SEARCH REPORT
ON EUROPEAN PATENT APPLICATION NO.**                EP 05 10 0054

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2005

| Patent document cited in search report | | Publication date | Patent family member(s) | | Publication date |
|---|---|---|---|---|---|
| US 4148294 | A | 10-04-1979 | DE | 2616662 A1 | 07-07-1977 |
| | | | AT | 357389 B | 10-07-1980 |
| | | | AT | 263177 A | 15-11-1979 |
| | | | BR | 7702429 A | 10-01-1978 |
| | | | CA | 1074647 A1 | 01-04-1980 |
| | | | CH | 629543 A5 | 30-04-1982 |
| | | | FR | 2348281 A1 | 10-11-1977 |
| | | | GB | 1523843 A | 06-09-1978 |
| | | | GR | 62666 A1 | 17-05-1979 |
| | | | IN | 149142 A1 | 26-09-1981 |
| | | | IT | 1083230 B | 21-05-1985 |
| | | | JP | 1293544 C | 16-12-1985 |
| | | | JP | 52126638 A | 24-10-1977 |
| | | | JP | 60014983 B | 17-04-1985 |
| | | | NO | 771219 A ,B, | 18-10-1977 |
| | | | SE | 435299 B | 17-09-1984 |
| | | | SE | 7704189 A | 16-10-1977 |
| | | | US | 4235226 A | 25-11-1980 |
| | | | YU | 81277 A1 | 30-06-1982 |
| EP 0052569 | A | 26-05-1982 | FR | 2494396 A1 | 21-05-1982 |
| | | | AT | 25875 T | 15-03-1987 |
| | | | DE | 3175975 D1 | 16-04-1987 |
| | | | EP | 0052569 A1 | 26-05-1982 |
| GB 2009793 | A | 20-06-1979 | SE | 408587 B | 18-06-1979 |
| | | | CA | 1119908 A1 | 16-03-1982 |
| | | | DE | 2850134 A1 | 23-05-1979 |
| | | | DK | 518678 A | 22-05-1979 |
| | | | FR | 2409468 A1 | 15-06-1979 |
| | | | SE | 7713121 A | 22-05-1979 |
| US 4440606 | A | 03-04-1984 | NONE | | |
| EP 0249919 | A | 23-12-1987 | DE | 3620285 A1 | 17-12-1987 |
| | | | DE | 3640376 A1 | 01-06-1988 |
| | | | EP | 0249919 A2 | 23-12-1987 |
| | | | JP | 63025454 A | 02-02-1988 |
| US 3920413 | A | 18-11-1975 | AU | 7198874 A | 05-02-1976 |
| | | | CA | 1029613 A1 | 18-04-1978 |
| | | | CH | 615500 A5 | 31-01-1980 |
| | | | DE | 2438329 A1 | 16-10-1975 |
| | | | FR | 2266753 A1 | 31-10-1975 |
| | | | GB | 1481821 A | 03-08-1977 |
| | | | IL | 45401 A | 31-05-1977 |

For more details about this annex : see Official Journal of the European Patent Office, No. 12/82

14

## ANNEX TO THE EUROPEAN SEARCH REPORT
## ON EUROPEAN PATENT APPLICATION NO.

EP 05 10 0054

11-08-2005

| Patent document cited in search report | | Publication date | Patent family member(s) | | Publication date |
|---|---|---|---|---|---|
| US 3920413 | A | | IN 140207 | A1 | 25-09-1976 |
| | | | IT 1016856 | B | 20-06-1977 |
| | | | JP 1140368 | C | 24-03-1983 |
| | | | JP 50134236 | A | 24-10-1975 |
| | | | JP 57031052 | B | 02-07-1982 |
| | | | NL 7411026 | A | 07-10-1975 |
| GB 1588936 | A | 29-04-1981 | JP 54160528 | A | 19-12-1979 |
| | | | JP 1158968 | C | 25-07-1983 |
| | | | JP 53016935 | A | 16-02-1978 |
| | | | JP 57047826 | B | 12-10-1982 |
| | | | AU 504928 | B2 | 01-11-1979 |
| | | | AU 2724677 | A | 25-01-1979 |
| | | | DE 2734032 | A1 | 02-02-1978 |
| | | | FR 2360051 | A1 | 24-02-1978 |
| | | | IT 1079399 | B | 08-05-1985 |
| | | | SE 7708650 | A | 30-01-1978 |
| | | | AU 500987 | B2 | 07-06-1979 |
| | | | AU 2403477 | A | 12-10-1978 |
| US 4394415 | A | 19-07-1983 | JP 58024757 | A | 14-02-1983 |
| | | | JP 59024341 | B | 08-06-1984 |
| EP 1279905 | A | 29-01-2003 | AT 5406 | U1 | 25-06-2002 |
| | | | EP 1279905 | A2 | 29-01-2003 |
| WO 9103583 | A | 21-03-1991 | CA 1341327 | C | 18-12-2001 |
| | | | AT 104703 | T | 15-05-1994 |
| | | | AU 6287090 | A | 08-04-1991 |
| | | | WO 9103583 | A1 | 21-03-1991 |
| | | | DE 69008359 | D1 | 26-05-1994 |
| | | | DE 69008359 | T2 | 04-08-1994 |
| | | | EP 0490914 | A1 | 24-06-1992 |
| | | | ES 2052269 | T3 | 01-07-1994 |
| | | | JP 2945472 | B2 | 06-09-1999 |
| | | | JP 5503316 | T | 03-06-1993 |
| CH 589269 | A5 | 30-06-1977 | NONE | | |
| US 5472788 | A | 05-12-1995 | AU 3122695 | A | 16-02-1996 |
| | | | WO 9602688 | A1 | 01-02-1996 |